# EUROPÄISCHE PATENTSCHRIFT

(11) **EP 3 032 218 B1**
(45) Veröffentlichungstag und Bekanntmachung des Hinweises auf die Patenterteilung: **28.02.2018**
(21) Anmeldenummer: 15192791.0
(22) Anmeldetag: 03.11.2015
(51) Int. Cl.: G01B 21/04, G01B 5/012, G01B 5/00

(54) **VORRICHTUNG MIT EINEM MESSKOPF**
DEVICE WITH A SENSING HEAD
DISPOSITIF DOTÉ D'UNE TÊTE DE MESURE

(30) Priorität: 09.12.2014 DE 102014118215
(43) Veröffentlichungstag der Anmeldung: 15.06.2016
(73) Patentinhaber: Hexagon Metrology GmbH, 35578 Wetzlar (DE)
(72) Erfinder: Heiderich, Jens, 35745 Herborn (DE)
(74) Vertreter: Knefel, Cordula

(56) Entgegenhaltungen:
- DE-A1- 2 151 557
- DE-A1- 4 025 829
- DE-A1- 10 030 570
- DE-A1- 10 326 247
- JP-A- H11 257 307
- Nicolae Craciunoiu, Bogdan O. Ciocirlan: "Hydraulic Cylinders" In: Dan B. Marghitu: "Mechanical Engineer's Handbook", 2001, Academic Press, XP040425235, ISBN: 0-12-471370-X Seiten 575-576, * Seite 575 - Seite 576; Abbildung 2.2 *

## Beschreibung

Die Erfindung betrifft eine Vorrichtung mit einem Messkopf.

Zum Stand der Technik gehören verschiedene Vorrichtungen mit einem Messkopf, beispielsweise Koordinatenmessgeräte mit einem schaltenden oder messenden Tastkopf oder Werkzeugmaschinen mit entsprechenden Messköpfen. Aus der Praxis sind verschiedene Anordnungen bekannt, um einen Taster oder Sensor an einem Messkopf anzuordnen. Die aus der Praxis bekannten Koordinatenmessgeräte und die dort eingesetzten Tastköpfe weisen eine mechanische Schnittstelle auf, die es erlaubt, unterschiedliche Tasterkonfigurationen automatisch einzuwechseln.

Ein derartiger Messkopf ist aus der DE 100 30 570 A1 bekannt. Die aus diesem Stand der Technik bekannte Schnittstelle besteht aus drei Lagereinheiten am Tastkopf und einer so genannten Tasteraufnahme mit den entsprechenden Gegenstücken zu den Lagereinheiten. In die Tasteraufnahme werden die benötigten Taster eingeschraubt. Die Lagerkomponenten an der Aufnahme, bestehend zum Beispiel aus drei Kugeln, setzen sich in die entsprechenden Lagerteile am Tastkopf. Eine Haltevorrichtung im Tastkopf zieht die Aufnahme, die eine Einrastmöglichkeit für die Haltevorrichtung aufweist, mit einer definierten Kraft in die drei Lager. Die Haltevorrichtung kann aus einer Feder und/oder einem Magneten bestehen.

Diese Art der Lagerung erlaubt einen sehr präzisen und hochgenau reproduzierbaren Sitz der Aufnahme am Tastkopf. Dies ist zwingend erforderlich, um bei Messungen mit unterschiedlichen Tastern Bezüge zwischen ihnen bilden zu können.

Aus dem genannten Stand der Technik ist es bekannt, die Tasteraufnahme durch einen Haken in die drei Lagereinheiten zu ziehen. Die Kraft hierfür erzeugt eine Feder in einem Zylinder. Soll der Haken geöffnet werden, um die mechanische Verbindung zu lösen, wird ein Kolben, an dem der Haken befestigt ist, mit Druckluft beaufschlagt und die Feder dadurch überbrückt.

Werden höhere Haltekräfte am Haken benötigt, wird in der Praxis die Feder durch eine Feder mit höherer Kraft ersetzt. Diese Kraft darf allerdings nie die am Kolben mit Hilfe der Druckluft erreichte Kraft überschreiten, da sonst der Haken nicht durch die Druckluft geöffnet werden kann.

Zum Stand der Technik (DE 40 25 829 A1) gehört eine Halterung für einen Taster von Koordinatenmessmaschinen. Diese Halterung besteht aus zwei Spanneinrichtungen, wobei die erste Spanneinrichtung in der Art eines Saugnapfes ausgebildet ist und mit Unterdruck beaufschlagt wird, um den Taster zu halten. Die zweite Spanneinrichtung ist als Permanentmagnet ausgebildet.

Weiterhin gehört zum Stand der Technik (DE 100 30 570 A1) ein Verfahren zum schnellen Lösen eines Taststiftes von einem Tastkopf eines Koordinatenmessgerätes. Dieses zum Stand der Technik gehörende Verfahren offenbart ein rasches Öffnen der Vorrichtung, um einen Taststift, beispielsweise im Falle einer Kollision frei zu geben. Hinsichtlich der Anordnung von Tastern mit hoher Masse oder auch einem hohen Drehmoment kann dieses zum Stand der Technik gehörende Koordinatenmessgerät noch weiter verbessert werden.

Weiterhin gehört zum Stand der Technik (JP H11-257307 A) ein Messkopf mit einem Taster. Der Messkopf weist zwei mit Druckluft beaufschlagbare Räume und zusätzlich eine Feder auf. Auch diese zum Stand der Technik gehörende Vorrichtung weist den Nachteil auf, dass das Gewicht unterschiedlich schwerer Taster nicht berücksichtigt wird.

Zum Stand der Technik (DE 21 51 557 A) gehört darüber hinaus ein Messgerät, mit dem Größenabmessungen von Werkstücken gegenüber einer Anzahl von Bezugsachsen gemessen werden können.

Bei diesem Messgerät ist ein beidseitig beaufschlagbarer Kolben vorgesehen. Dieses Messgerät weist jedoch ebenfalls den Nachteil auf, dass das Gewicht unterschiedlich schwerer Taster nicht berücksichtigt wird.

Darüber hinaus gehört zum Stand der Technik (DE 103 26 247 A1) eine Koordinatenmessmaschine mit einem Gewichtsausgleich für Taster. Diese zum Stand der Technik gehörende Messmaschine kann hinsichtlich der Anordnung von Tastern mit einem hohen Drehmoment weiter verbessert werden.

Das der Erfindung zugrunde liegende technische Problem besteht darin, eine Vorrichtung mit einem Messkopf anzugeben, bei der die Haltekraft größer ist als bei den zum Stand der Technik gehörenden Vorrichtungen, um auch Taster mit hoher Masse oder mit hohem Drehmoment sicher in den Lagern zu halten.

Dieses technische Problem wird durch eine Vorrichtung mit den Merkmalen gemäß Anspruch 1 gelöst.

Die erfindungsgemäße Vorrichtung mit einem Messkopf mit einer auswechselbaren Tasteraufnahme für wenigstens einen Sensor und/oder wenigstens ein Dreh-/Schwenkgelenk und/oder wenigstens einen Taster, wobei der Messkopf eine Vorrichtung zur Erzeugung einer ersten Haltekraft für die Tasteraufnahme aufweist, wobei der Messkopf eine zweite Vorrichtung zur Erzeugung einer zusätzlichen Haltekraft aufweist, zeichnet sich dadurch aus, dass der Messkopf ein Doppelkolbensystem aufweist, dass das Doppelkolbensystem mit einem Kolben von einer der Tasteraufnahme abgewandten Seite durch eine erste Einlassöffnung wie auch auf einer der Tasteraufnahme zugewandten Seite durch eine zweite Einlassöffnung mit Druckluft beaufschlagbar ist, dass der Kolben, an dem die Tasteraufnahme befestigt ist, auf der aufnahmeseitigen Seite des Kolbens mit Druckluft beaufschlagbar ausgebildet ist, derart, dass dadurch eine zusätzliche Kraft zu der ersten Vorrichtung zur Erzeugung einer ersten Haltekraft erzeugbar ist, und dass eine Luftversorgung des Kolbens mit einem pneumatischen Gewichtsausgleich gekoppelt ist.

Die erfindungsgemäße Vorrichtung weist den Vorteil auf, dass durch die zweite Vorrichtung eine zusätzliche Haltekraft erzeugt wird, die zu der ersten Haltekraft hinzukommt. Hierdurch wird die Gesamthaltekraft erhöht, um auch Taster mit einer hohen Masse oder mit hohem Drehmoment, die beispielsweise durch asymmetrisch verteilte seitlich angebrachte Massen entstehen, sicher in den Lagern halten zu können.

Gemäß der Erfindung ist vorgesehen, dass der Messkopf ein Doppelkolbensystem aufweist und dass die zusätzliche zweite Vorrichtung als ein Gegenkolben ausgebildet ist.

Durch das Doppelkolbensystem besteht die Möglichkeit, dass der Kolben, an dem die Aufnahme für den wenigstens einen Sensor und/oder das wenigstens eine Drehschwenkgelenk und/oder wenigstens den einen Taster befestigt ist, auch von der Seite, beispielsweise mit Luft, beaufschlagt werden kann, die in Richtung der Aufnahme angeordnet ist. So kann eine zusätzliche Kraft zu der Vorrichtung, die die erste Haltekraft erzeugt, erzeugt werden und die Haltekraft wird hierdurch erhöht.

Gemäß einer weiteren vorteilhaften Ausführungsform der Erfindung ist für die Erzeugung der ersten Haltekraft wenigstens eine Feder und/oder wenigstens ein Magnet vorgesehen.

Diese beiden Vorrichtungen arbeiten zuverlässig und sind kostengünstig.

Gemäß der Erfindung ist der Gegenkolben als pneumatischer Gegenkolben ausgebildet. Gerade im Anwendungsbereich von Koordinatenmessgeräten hat es sich als vorteilhaft herausgestellt, mit Luft zu arbeiten, da keine Verschmutzungen auftreten, wie beispielsweise bei der Verwendung von hydraulischen Systemen mit Öl.

Gemäß der Erfindung ist vorgesehen, dass eine Luftversorgung des pneumatischen Gegenkolbens mit einem pneumatischen Gewichtsausgleich gekoppelt ausgebildet ist.

Vorteilhaft ist zusätzlich die Druckversorgung auf der Aufnahmeseite des Messkopfes mit einem weiteren, beispielsweise pneumatischen Kolben verbunden, der in einem Zylinder angeordnet ist. Der Kolben ist vorteilhaft mit einer Feder verbunden. Die Feder ist vorzugsweise an einem gegenüber der so genannten Z-Schaukel ortsfest angeordneten Bauteil des Messkopfes befestigt. Durch die Betätigung des Kolbens, der auf die Feder wirkt und der an der in Z-Richtung beweglichen Z-Schaukel angeordnet ist, wird die Z-Schaukel entgegen der Schwerkraft hochgezogen, um einen Gewichtsausgleich für verschiedene Taster, Drehschwenkgelenke oder Sensoren durchführen zu können.

Gemäß einer weiteren vorteilhaften Ausführungsform der Erfindung ist vorgesehen, dass die wenigstens eine Feder als eine bei einem Ausfall der zusätzlichen Haltekraft die Aufnahme abstützende Feder ausgebildet ist.

Entfällt die zusätzliche Haltekraft, wenn beispielsweise ein Luftausfall vorliegt, ist es erforderlich, dass die die erste Haltekraft erzeugende Feder und/oder der die erste Haltekraft erzeugende Magnet die Aufnahme für den wenigstens einen Sensor und/oder das wenigstens eine Drehschwenkgelenk und/oder den wenigstens einen Taster auffängt, um einen Schaden an dem Sensor, dem Drehschwenkgelenk und/oder dem Taster zu vermeiden.

Eine weitere vorteilhafte Ausführungsform der Erfindung sieht vor, dass die Vorrichtung als Koordinatenmessgerät ausgebildet ist. Koordinatenmessgeräte werden in vielen Bereichen eingesetzt und die Taster und/oder optische Sensoren und/oder Drehschwenkgelenke werden je nach Einsatzfall ausgetauscht. Da in der Praxis immer häufiger auch weit auskragende Taststiftsysteme verwendet werden, ist es besonders vorteilhaft, die Erfindung bei einem Koordinatenmessgerät einzusetzen, um die erhöhte Haltekraft erzeugen zu können, die bei Tastern mit hoher Masse und mit hohem Drehmoment für reproduzierbare Messungen erforderlich ist.

Eine weitere vorteilhafte Ausführungsform der Erfindung sieht vor, dass ein Schaft der Aufnahme mit dem Doppelkolben fest verbunden ist, dass der Doppelkolben in einem mit Luft beaufschlagbaren Raum angeordnet ist und dass wenigstens eine Dichtung für den in den Raum geführten Schaft vorgesehen ist.

Die Aufnahme ist beispielsweise mittels eines Schaftes an dem Kolben befestigt. Der Schaft muss hierzu in den mit Luft beaufschlagbaren Raum geführt werden, da der Kolben in diesem Raum angeordnet ist. Vorteilhaft ist hierzu der Schaft durch eine Dichtung, die im Bereich der Durchführöffnung des Schaftes angeordnet ist, gegenüber dem mit Luft beaufschlagbaren Raum abgedichtet.

Gemäß der Erfindung ist also vorgesehen, dass die erreichbare Gesamtkraft sich aus der ersten Haltekraft, beispielsweise der Federkraft oder Magnetkraft, und der zusätzlichen Haltekraft, das heißt der auf den Kolben wirkenden Kraft zusammensetzt. Durch den Schaft für die Aufnahme ist die bei einem bestimmten Luftdruck erreichbare Kraft auf der Unterseite des Kolbens etwas geringer als die Kraft auf der Oberseite bei diesem Druck.

Weitere Merkmale und Vorteile der Erfindung ergeben sich anhand der zugehörigen Zeichnung, in der ein Ausführungsbeispiel eines Messkopfes für ein Koordinatenmessgerät nur beispielhaft dargestellt ist. In der Zeichnung zeigen:
- Fig. 1: einen Messkopf gemäß dem Stand der Technik im Längsschnitt;
- Fig. 2: einen erfindungsgemäßen Messkopf im Längsschnitt;
- Fig. 3: eine Draufsicht auf eine Anordnung von drei Gegenlagern.

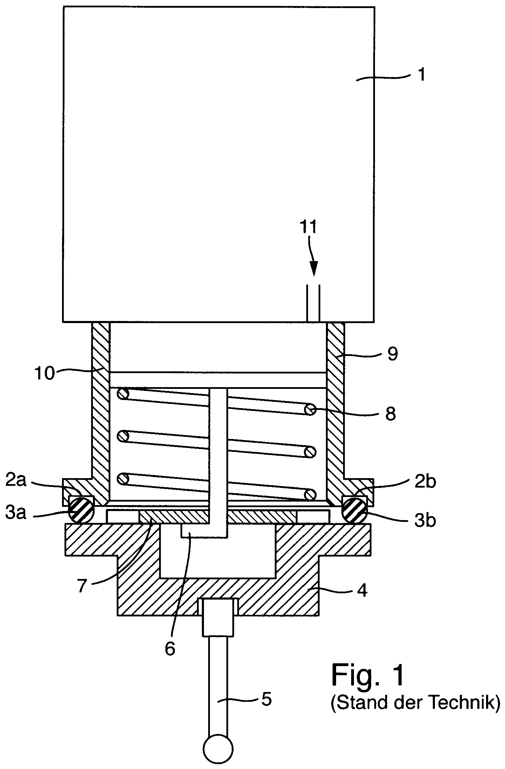

Fig. 1 zeigt einen Messkopf 1, der drei Lagereinheiten 2a, 2b, 2c aufweist, von denen in Fig. 1 lediglich die Lagereinheiten 2a, 2b dargestellt sind.

Darüber hinaus ist eine Tasteraufnahme 4 vorgesehen, in der ein Taster 5 eingeschraubt ist. Die Tasteraufnahme 4 weist Lagerkomponenten 3a, 3b, 3c auf, von denen in Fig. 1 lediglich die Lagerkomponenten 3a, 3b dargestellt sind. Die Lagerkomponenten 3a, 3b, 3c sind als Kugeln ausgebildet. Diese setzen sich in die entsprechenden Lagereinheiten 2a, 2b, 2c am Messkopf 1. Eine Haltevorrichtung 6, die als Haken ausgebildet ist, zieht die Tasteraufnahme 4, die eine Einrastvorrichtung 7 für die Haltevorrichtung 6 aufweist, mit einer definierten Kraft in die drei Lager 2a, 2b, 2c.

Diese Art der Lagerung erlaubt einen sehr präzisen und hoch reproduzierbaren Sitz der Tasteraufnahme 4 am Messkopf 1. Dies ist zwingend erforderlich, um bei Messungen mit unterschiedlichen Tastern Bezüge zwischen ihnen bilden zu können.

Die Tasteraufnahme 4 wird durch den Haken 6 in die Lagereinheiten 2a, 2b, 2c gezogen. Die Kraft dafür erzeugt eine Feder 8 in einem Zylinder 9. Soll der Haken 6 geöffnet werden, um die mechanische Verbindung zu lösen, wird ein Kolben 10 mit Druckluft 11 beaufschlagt und die Feder 8 wird hierdurch überbrückt.

Sollen größere Haltekräfte erzeugt werden, können nur bis zu einem bestimmten Grad Federn mit größerer Haltekraft verwendet werden. In vielen Fällen ist aus Platzgründen die Verwendung einer Feder mit größerer Haltekraft im Messkopf 1 nicht möglich.

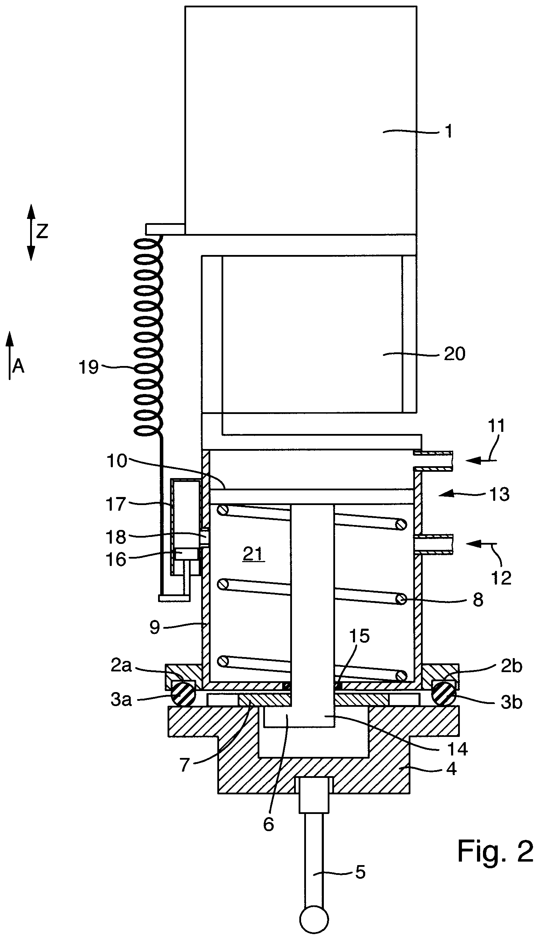

Fig. 2 zeigt einen erfindungsgemäßen Messkopf 1.

Gleiche Teile in Fig. 1 und Fig. 2 sind mit gleichen Bezugszahlen versehen.

An dem Messkopf 1 ist in dem Zylinder 9 ein Doppelkolbensystem 13 angeordnet. Das Doppelkolbensystem 13 mit dem Kolben 10 kann von einer der Tasteraufnahme 4 abgewandten Seite durch eine Einlassöffnung 11 wie auch auf einer der Tasteraufnahme 4 zugewandten Seite durch eine Einlassöffnung 12 mit Druckluft beaufschlagt werden. Wird durch die Einlassöffnung 12, das heißt der aufnahmeseitigen Seite des Kolbens 10 eine Beaufschlagung mit Druckluft vorgenommen, wirkt eine zusätzliche Kraft zu der Feder 8, wodurch die Gesamthaltekraft erhöht wird. Die Gesamthaltekraft setzt sich somit aus der Federkraft der Feder 8 und der Kraft, die durch die Druckluft, die durch die Einlassöffnung 12 zugeführt wird und am Kolben 13 wirkt, zusammen.

Ein Schaft 14 des Hakens 6 wird durch eine Dichtung 15 im Zylinder 9 abgedichtet. Durch den Schaft 14 für den Haken 6 ist die bei einem bestimmten Luftdruck erreichbare Kraft auf der Unterseite des Kolbens 10 etwas geringer als die Kraft auf der Oberseite bei diesem Druck.

Zusätzlich ist die Druckversorgung auf der aufnahmeseitigen Seite des Kolbens 10 mit einem weiteren pneumatischen Kolben 16 in einem Zylinder 17 verbunden. Der Zylinder 17 steht über eine Öffnung 18 mit einem Raum 21 des Zylinders 9 in Verbindung. Der Kolben 16 ist mit einer Feder 19, die am ortsfesten Teil des Messkopfes 1 befestigt ist, gekoppelt. Eine lediglich schematisch angedeutete Z-Schaukel 20 wird durch das System, bestehend aus Zylinder 17, Kolben 16 und Feder 19, in Z-Richtung verschoben. Wird der Raum 21 mit Druckluft beaufschlagt, so wird ebenfalls der Raum in dem Zylinder 17 mit Druckluft beaufschlagt. Hierdurch wird der Kolben 16 in Richtung der Tasteraufnahme 4 bewegt, wodurch über die Kopplung mit der Feder 19 eine Bewegung der Z-Schaukel 22 in Richtung des Pfeiles A üblicherweise entgegen der Schwerkraft erfolgt. Hierdurch wird bei Beaufschlagung mit Druckluft des Raumes 21 nicht nur eine höhere Haltekraft am Haken 6 erreicht, sondern auch ein Gewichtsausgleich des zusätzlichen Gewichtes des eingesetzten Tasters 5 mit der Tasteraufnahme 4 durchgeführt.

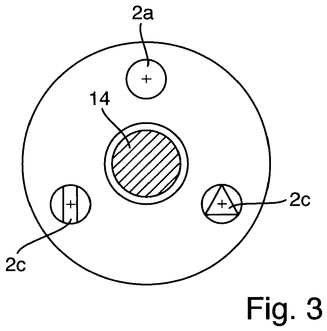

Fig. 3 zeigt die Lager 2a, 2b, 2c, die die Lagerkomponenten 2b (in Fig. 3 nicht dargestellt) aufnehmen. Das Lager 2a ist als Planlager, das Lager 2c als V-Lager und das Lager 2c als Tripel-Lager ausgebildet. Durch diese Ausgestaltung wird eine genaue und reproduzierbare Anordnung der Lagerkomponenten 3a, 3b, 3c möglich. In Fig. 3 ist darüber hinaus der Schacht 14 dargestellt.

### Bezugszahlen

- 1: Messkopf
- 2a: Lagereinheit
- 2b: Lagereinheit
- 2c: Lagereinheit
- 3a: Lagerkomponente
- 3b: Lagerkomponente
- 3c: Lagerkomponente
- 4: Tasteraufnahme
- 5: Taster
- 6: Haken
- 7: Einrastvorrichtung
- 8: Feder
- 9: Zylinder
- 10: Kolben
- 11: Einlassöffnung
- 12: Einlassöffnung
- 13: Doppelkolbensystem
- 14: Schaft
- 15: Dichtung
- 16: Kolben
- 17: Zylinder
- 18: Einlassöffnung
- 19: Feder
- 20: Z-Schaukel
- 21: Raum in dem Zylinder 9

## Patentansprüche

1. Vorrichtung mit einem Messkopf (1) mit einer auswechselbaren Tasteraufnahme (4) für wenigstens einen Sensor und/oder wenigstens ein Dreh-/Schwenkgelenk und/oder wenigstens einen Taster (5), wobei der Messkopf (1) eine Vorrichtung (6, 8) zur Erzeugung einer ersten Haltekraft für die Tasteraufnahme (4) aufweist, wobei der Messkopf (1) eine zweite Vorrichtung (13) zur Erzeugung einer zusätzlichen Haltekraft aufweist,
**dadurch gekennzeichnet, dass** der Messkopf (1) ein Doppelkolbensystem (13) aufweist, dass das Doppelkolbensystem (13) mit einem Kolben (10) von einer der Tasteraufnahme (4) abgewandten Seite durch eine erste Einlassöffnung (11) wie auch auf einer der Tasteraufnahme (4) zugewandten Seite durch eine zweite Einlassöffnung (12) mit Druckluft beaufschlagbar ist, dass der Kolben (10), an dem die Tasteraufnahme (4) befestigt ist, auf der aufnahmeseitigen Seite des Kolbens (10) mit Druckluft beaufschlagbar ausgebildet ist, derart, dass dadurch eine zusätzliche Kraft zu der ersten Vorrichtung (6, 8) zur Erzeugung einer ersten Haltekraft erzeugbar ist, und dass eine Luftversorgung des Kolbens (10) mit einem pneumatischen Gewichtsausgleich gekoppelt ist.

2. Vorrichtung mit einem Messkopf nach Anspruch 1,
**dadurch gekennzeichnet, dass** für die Erzeugung der ersten Haltekraft wenigstens eine Feder (8) und/oder wenigstens ein Magnet vorgesehen ist.

3. Vorrichtung mit einem Messkopf nach Anspruch 2,
**dadurch gekennzeichnet, dass** die wenigstens eine Feder (8) und/oder der wenigstens eine Magnet als eine bei einem Ausfall der zusätzlichen Haltekraft die Tasteraufnahme (4) abstützende Feder (8) oder Magnet ausgebildet ist.

4. Vorrichtung mit einem Messkopf nach einem der vorhergehenden Ansprüche, **dadurch gekennzeichnet, dass** ein Schaft (14) der Tasteraufnahme (4) mit dem Doppelkolben (10) fest verbunden ist, dass der Doppelkolben (10) in einem mit Luft beaufschlagbaren Raum (21) angeordnet ist, und dass wenigstens eine Dichtung (15) für den in den Raum (21) geführten Schaft (14) vorgesehen ist.

5. Vorrichtung mit einem Messkopf nach einem der vorhergehenden Ansprüche, **dadurch gekennzeichnet, dass** die Vorrichtung als Koordinatenmessgerät ausgebildet ist.

## Claims

1. A device having a measuring head (1) having a replaceable probe holder (4) for at least one sensor and/or at least one swivel/pivot joint and/or at least one probe (5), wherein the measuring head (1) has a device (6, 8) for generating a first retention force for the probe holder (4), wherein the measuring head (1) has a second device (13) for generating an additional retention force,
**characterised in that** the measuring head (1) has a double piston system (13), **in that** the double piston system (13) having a piston (10) can be acted upon by compressed air both from a side facing away from the probe holder (4) through a first inlet opening (11) and on a side facing the probe holder (4) through a second inlet opening (12), **in that** the piston (10), on which the probe holder (4) is mounted, is designed such that it can be acted upon by compressed air on the holder-side side of the piston (10) in such a way that it is thus possible to generate an additional force to the first device (6, 8) for generating a first retention force, and **in that** an air supply for the piston (10) is coupled to a pneumatic counterbalance.

2. The device having a measuring head according to Claim 1, **characterised in that** a spring (8) and/or at least one magnet is provided for generating the first retention force.

3. The device having a measuring head according to Claim 2, **characterised in that** the at least one spring (8) and/or the at least one magnet is designed as a spring (8) or magnet which supports the probe holder (4) in the event of a loss of the additional retention force.

4. The device having a measuring head according to one of the preceding claims, **characterised in that** a shaft (14) of the probe holder (4) is fixedly connected to the double piston (10), **in that** the double piston (10) is arranged in a chamber (21) which can be acted upon by air, and **in that** at least one seal (15) is provided for the shaft (14) which is guided in the chamber (21) .

5. The device having a measuring head according to one of the preceding claims, **characterised in that** the device is designed as a coordinate measuring device.

## Revendications

1. Dispositif avec une tête de mesure (1) avec un logement de palpeur (4) interchangeable pour au moins un capteur et/ou au moins une articulation rotative/pivotante et/ou au moins un palpeur (5), la tête de mesure (1) comprenant un dispositif (6, 8) pour la production d'une première force de maintien pour le logement de palpeur (4), la tête de mesure (1) comprenant un deuxième dispositif (13) pour la production d'une force de maintien supplémentaire,
**caractérisé en ce que** la tête de mesure (1) comprend un système à double piston (13), **en ce que** le système à double piston (13) peut être alimenté en air comprimé avec un piston (10) à partir d'un côté opposé au logement de palpeur (4) à travers une première ouverture d'admission (11) ainsi que sur un côté orienté vers le logement de palpeur (4) à travers une deuxième ouverture d'admission (12), **en ce que** le piston (10), auquel le logement de palpeur (4) est fixé, est conçu, sur le côté, orienté vers le logement, du piston (10), de manière à pouvoir être alimenté en air comprimé, de façon à ce qu'une force supplémentaire puisse être produite en plus du premier dispositif (6, 8) pour la production d'une première force de maintien et **en ce qu'**une alimentation en air du piston (10) est couplée avec un équilibrage pneumatique.

2. Dispositif avec une tête de mesure selon la revendication 1, **caractérisé en ce que**, pour la production de la première force de maintien, au moins un ressort (8) et/ou au moins un aimant est prévu.

3. Dispositif avec une tête de mesure selon la revendication 2, **caractérisé en ce que** l'au moins un ressort (8) et/ou l'au moins un aimant est conçu comme un ressort (8) et/ou un aimant soutenant le logement de palpeur (4) lors d'une défaillance de la force de maintien supplémentaire.

4. Dispositif avec une tête de mesure selon l'une des revendications précédentes, **caractérisé en ce qu'**une tige (14) du logement de palpeur (4) est reliée fermement avec le double piston (10), **en ce que** le double piston (10) est disposé dans un espace (21) pouvant être alimenté en air, et **en ce qu'**au moins un joint d'étanchéité (15) est prévu pour la tige (14) guidée dans l'espace (21).

5. Dispositif avec une tête de mesure selon l'une des revendications précédentes, **caractérisé en ce que** le dispositif est conçu comme un appareil de mesure de coordonnées.
